# FASCICULE DE BREVET EUROPEEN

(11) **EP 1 475 979 B1**
(45) Date de publication et mention de la délivrance du brevet: **22.09.2010**
(21) Numéro de dépôt: 04291162.8
(22) Date de dépôt: 05.05.2004
(51) Int. Cl.: H04W 76/02

(54) **Procédé pour l'établissement de connexion dans un système de radiocommunications mobiles**
Verfahren zur Aufbau einer Verbindung in einem mobilen Funkkommunikationssystem
Method for establishing a connection in a system of mobile radio communication

(30) Priorité: 07.05.2003 FR 0305602
(43) Date de publication de la demande: 10.11.2004
(73) Titulaire: Alcatel- Lucent Shanghai Bell Co., Ltd, 75008 Paris (FR)
(72) Inventeur: Fischer, Patrick, 92340 Bourg La Reine (FR)
(74) Mandataire: El Manouni, Josiane

(56) Documents cités:
- GB-A- 2 355 888
- US-B1- 6 532 225

## Description

La présente invention concerne d'une manière générale les systèmes de radiocommunications mobiles.

D'une manière générale, les systèmes de radiocommunications mobiles font l'objet de normalisation, et pour une description complète de ces systèmes on pourra se référer aux normes correspondantes, publiées par les organismes de normalisation correspondants.

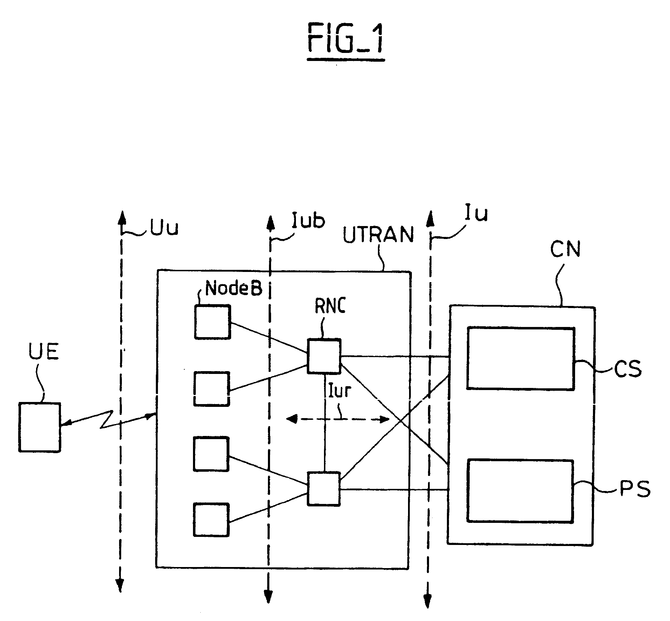

L'architecture générale d'un système de radiocommunications mobiles tel que notamment un système de type UMTS (« Universal Mobile Télécommunication System ») est rappelée sur la figure 1. Le système comporte un réseau de radiocommunications mobiles communiquant avec des terminaux mobiles ou UE (« User Equipment ») et avec des réseaux extérieurs (non illustrés spécifiquement).

Le réseau de radiocommunications mobiles comporte :
- un réseau d'accès radio, ou UTRAN (« UMTS Terrestrial Radio Access Network »),
- un réseau coeur, ou CN (« Core Network »).

Les systèmes de troisième génération, notamment de type UMTS (« Universal Mobile Télécommunication System ») utilisent une technologie d'accès radio de type W-CDMA (« Wideband - Code Division Multiple Access »). L'UTRAN comporte des stations de base ou « Node B », et des contrôleurs de stations de base ou contrôleurs de réseau radio ou RNC (« Radio Network Controller »). L'UTRAN est en relation d'une part avec les terminaux mobiles UE, via une interface appelée interface « Uu » (ou interface radio), et d'autre part avec le CN via une interface appelée interface « lu ». A l'intérieur de l'UTRAN, les stations de base Node B communiquent avec les contrôleurs de stations de base RNC via une interface appelée interface « lub », et une interface appelée interface « lur » peut en outre être prévue entre RNCs.

Les systèmes de troisième génération, notamment de type UMTS, utilisent différentes technologies de réseau coeur : une technologie basée sur la commutation de circuit ou CS (« Circuit-Switched »), correspondant à un domaine appelé domaine CS (ou « CS domain »), et une technologie basée sur la commutation de paquet ou PS (« Packet-Switched »), correspondant à un domaine appelé domaine PS (ou « PS domain »).

D'une manière générale, les systèmes de troisième génération, notamment de type UMTS, doivent pouvoir supporter des trafics dont les besoins en qualité de service (ou QoS, pour « Quality of Service ») peuvent être très différents les uns des autres. Pour garantir la qualité de service à différents niveaux d'un tel système, une architecture de QoS a été définie, dans laquelle on distingue différents services support (tels que notamment : les services « support accès radio » ou RAB (« Radio Access Bearer ») entre CN et UE, les services « support radio » ou RB (« Radio Bearer ») entre RNC et UE, ...etc), et différents attributs de QoS (tels que notamment la classe de trafic, le débit maximal, le débit binaire garanti, le délai de transfert, ...etc). On distingue en outre quatre classes de trafic, respectivement pour des applications de type conversationnel (ou « conversational »), à flux continu (ou « streaming »), interactif (ou « interactive »), ou d'arrière-plan (ou « background »).

D'une manière générale, différents types de données peuvent être transmises dans ces systèmes : des données correspondant à des données utilisateur ou trafic, et des données correspondant à des données de contrôle ou signalisation nécessaire au fonctionnement du système. Différents protocoles ont été définis pour les échanges de données entre différents éléments de ces systèmes. Notamment, pour les échanges de signalisation, on distingue :
- le protocole RANAP (« Radio Access Network Application Part») tel que défini dans la spécification 3GPP TS 25.413, pour les échanges de signalisation entre CN et RNC,
- le protocole RNSAP (« Radio Network Subsystem Application Part ») tel que défini dans la spécification 3GPP TS 25.423, pour les échanges de signalisation entre RNCs reliés entre eux par une interface lur,
- le protocole NBAP (« Node B Application Part ») tel que défini dans la spécification 3GPP TS 25.433, pour les échanges de signalisation entre RNC et Node B,
- le protocole RRC (« Radio Resource Control ») tel que défini dans la spécification 3GPP TS 25.331, pour les échanges de siganlisation entre RNC et UE.

Différents types de canaux ont été définis pour les échanges de données entre UE et UTRAN, correspondant à différentes couches de protocole : des canaux logiques (ou « logical channels »), des canaux de transport (ou « transport channels ») des canaux physiques (ou « physical channels »). On distingue en outre des canaux communs (partagés entre plusieurs utilisateurs) et des canaux dédiés (réservés à un utilisateur). Les canaux dédiés peuvent notamment être alloués pour transmettre des données prioritaires (notamment du trafic ayant des contraintes de qualité de service les plus élevées), et les canaux communs peuvent notamment être alloués pour transmettre des données moins prioritaires (notamment du trafic ayant des contraintes de qualité de service moins élevées). Par exemple, pour les canaux de transport, on distingue des canaux dédiés ou DCH (« Dedicated CHannel »), et des canaux communs, indurant notamment les canaux PCH (« Paging CHannel »), FACH («Forward Access CHannel»), CPCH (« Common Packet CHannel »), DSCH (« Downlink Shared CHannel »).

Le document US-B1-6 532 225 décrit un arrangement dans lequel, en plus des canaux de contrôle utilisés pour l'établissement de sessions, il y a un ensemble logiquement et physiquement séparé et indépendant de canaux de contrôle qui sont utlisés comme canaux de contrôle de session.

Le RNC réalise des fonctions de gestion de ressources radio (incluant un contrôle d'admission d'appel, un contrôle de puissance, un contrôle de transfert inter-cellulaire ou « handover»,...etc.) notamment dans le but de garantir la qualité de service pour les services support RB, tout en utilisant efficacement les ressources radio disponibles. Pour une gestion optimisée des ressources radio, le RNC réalise également certaines fonctions de gestion de mobilité. Des algorithmes de gestion de mobilité ont ainsi été définis au niveau de l'UTRAN, basés sur un système d'états appelés états RRC (ou «RRC states» en anglais) et de transitions entre ces états.

On distingue ainsi deux modes possible pour un UE:
- un mode appelé « idle mode» (ou mode veille), dans lequel il n'y a pas de connexion entre l'UE et l'UTRAN, et l'UTRAN ne dispose d'aucune information sur la localisation de l'UE,
- un mode appelé « connected mode » (ou mode connecté), dans lequel il y a une connexion entre l'UE et l'UTRAN, et l'UTRAN dispose d'information sur la localisation de l'UE.

A l'intérieur du mode connecté on distingue différents états :
- un état appelé «Cell_DCH», dans lequel des ressources dédiées sont avouées à l'UE, et la localisation du terminal est connue de l'UTRAN au niveau d'une cellule ou d'un ensemble de cellules ou « active set », grâce aux mécanismes de transfert inter-cellulaire ou « handover »,
- un état appelé « Cell_FACH », dans lequel des ressources communes sont allouées à l'UE, et la localisation du terminal est connue au niveau d'une cellule, grâce à une procédure RRC de mise à jour de cellule (ou « RRC Cell Update »),
- un état appelé « Cell_PCH », dans lequel l'UE ne peut être joint qu'au moyen d'une procédure de « paging », et la localisation du terminal est connue au niveau d'une cellule, grâce à la procédure RRC de mise à jour de cellule (ou « RRC Cell Update »),
- un état appelé « URA_PCH », dans lequel l'UE ne peut être joint qu'au moyen d'une procédure de « paging », et la localisation du terminal est connue au niveau d'un ensemble de cellules ou URA (« UTRAN Registration Area »), grâce à une procédure RRC de mise à jour d'URA (ou « RRC URA Update »).

A titre d'exemple de transitions entre états :
- un UE passe du mode « Idle Mode » à l'état Cell_FACH ou Cell_DCH lors de l'établissement d'un appel,
- une fois que l'UE est dans l'état Cell_FACH ou Cell_DCH, il peut passer dans l'état Cell_PCH ou URA_PCH s'il n'y a temporairement pas de données à transmettre,
- une fois que l'UE est dans l'état Cell_PCH ou URA_PCH, il peut repasser dans l'état Cell_FACH s'il y a de nouveau des données à transmettre, ou pour mettre en oeuvre si nécessaire une procédure de mise à jour de cellule ou de mise à jour d'URA, après quoi l'UE peut retourner à l'état Cell_PCH ou URA_PCH,
- un UE peut également passer de l'état Cell_FACH à l'état Cell_DCH.

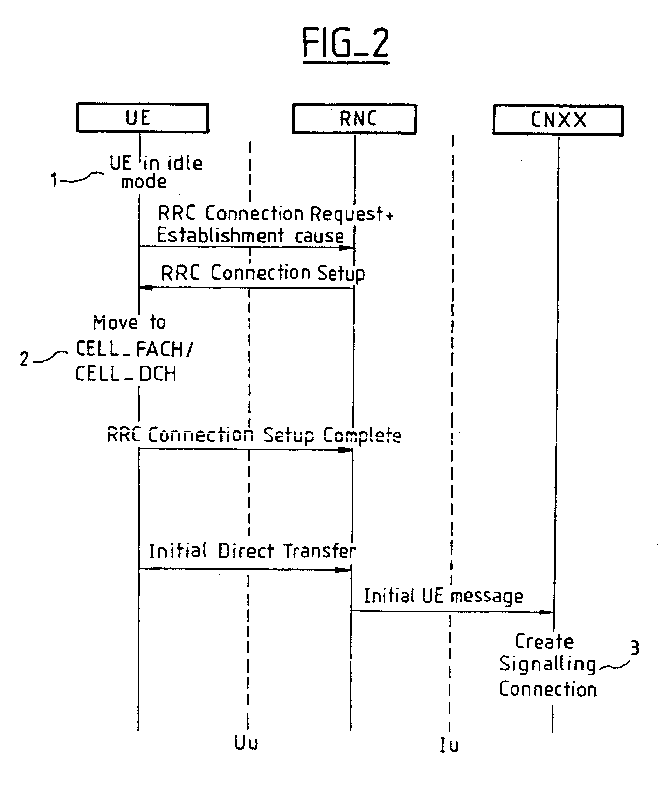

On rappelle maintenant, en relation avec les figures 2, 3 et 4, certains échanges de signalisation mis en oeuvre pour l'établissement d'une connexion dans un tel système. Des éléments communs aux différentes figures ont en l'occurrence été notés avec les mêmes références.

Sur la figure 2, on considère le cas d'un UE initialement dans le mode « Idle Mode », comme illustré en 1. Dans ce cas, l'établissement d'une connexion débute par l'établissement d'une connexion dite de contrôle radio (ou connexion RRC) entre UE et UTRAN.

Ainsi, lorsque l'UE souhaite établir une connexion, il envoie au RNC, selon le protocole RRC, un message de requête de connexion RRC ou message « RRC Connexion Request », tel que défini dans la spécification 3GPP TS 25.331. Ce message contient notamment des informations dites de cause d'établissement (ou « establishment cause »), ce qui a été noté « RRC Connection Request + Establishment Cause » sur la figure 2. Ces informations de cause d'établissement d'appel indiquent notamment:
- si la connexion est requise pour transmettre du trafic utilisateur, et si oui:
   - si le terminal est ou non à l'origine de l'appel, c'est-à-dire s'il s'agit d'un appel de type « mobile originating » ou « mobile terminating »,
   - la classe de trafic requise, à savoir l'une ou l'autre des classes de trafic : conversationnelle, à flux continu, interactive, ou d'arrière-plan,
   - s'il s'agit d'un appel d'urgence (ou « emergency call »),
   - s'il s'agit d'une demande de ré-établissement d'appel (ou « call reestablishment »).
- si la connexion est requise pour transmettre de la signalisation, et si oui s'il s'agit de signalisation prioritaire ou non prioritaire.

Sur la base des informations contenues dans le message « RRC connexion request » et notamment sur la base de la cause d'établissement ainsi indiquée, le RNC peut alors allouer des ressources radio à l'UE (ou SRB, pour « Signalling Radio Bearer ») pour la connexion RRC.

Le RNC envoie ensuite à l'UE un message « RRC Connection Setup » indiquant les ressources allouées pour la connexion RRC. La réception par l'UE de ce message commande alors le passage de l'UE dans l'état Cell_FACH ou Cell_DCH, comme illustré en 2. L'UE envoie ensuite au RNC un message « RRC Connection Setup Complete », qui termine la procédure d'établissement de connexion RRC.

L'établissement de la connexion se poursuit par l'établissement d'une connexion de signalisation entre UE et CN, la signalisation échangée au moyen de cette connexion correspondant à la signalisation échangée selon un protocole de niveau supérieur, ou NAS (« Non Access Stratum »). L'UE transmet au RNC, au moyen des ressources qui lui ont été allouées pour la connexion RRC, un message RRC appelé « RRC Initial Direct Transfer » contenant des informations destinées au CN. Le RNC re-transmet ces informations au domaine approprié du CN, noté CNXX (pour CN CS ou CN PS), dans un message appelé « UE Initial Message », transmis selon le protocole RANAP.

Une connexion de signalisation entre UE et CN est finalement créée, comme illustré en 3. L'établissement de la connexion peut ensuite se poursuivre, selon des mécanismes propres au protocole NAS.

Une connexion peut également être établie alors que l'UE n'est pas dans le mode « idle mode » mais dans le mode connecté. Ce cas correspond notamment au cas d'appel multiple (ou « multicall »), correspondant par exemple au cas d'un UE souhaitant initier un appel en mode circuit (ou connexion avec le domaine CN CS), alors qu'il est engagé dans une session en mode paquet (ou connexion avec le domaine CN PS).

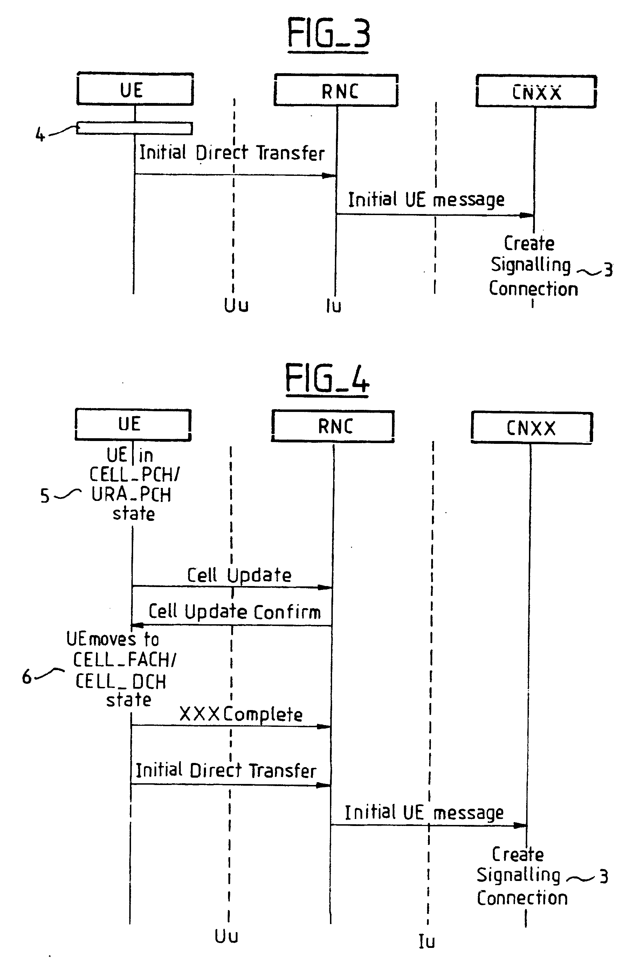

Le cas d'établissement de connexion pour un UE non initialement dans le mode « Idle Mode » est ainsi illustré sur les figures 3 et 4.

Sur la figure 3, l'UE est initialement dans l'état Cell_FACH ou Cell_DCH, comme illustré en 4. Dans ce cas, l'UE transmet directement au RNC le message « Initial Direct Transfer », et les étapes suivantes comportent, comme sur la figure 2, l'envoi par le RNC au CN du message « Initial UE Message », puis la création d'une connexion de signalisation entre UE et CN, comme illustré en 3.

Sur la figure 4, l'UE est initialement dans l'état Cell_PCH ou URA_PCH, comme illustré en 5. Dans ce cas, une procédure RRC de mise à jour de cellule est tout d'abord nécessaire, cette procédure incluant l'envoi par l'UE au RNC d'un message RRC « Cell Update» puis l'envoi par le RNC à l'UE d'un message « Cell Update Confirm ». L'UE passe alors dans l'état Cell_FACH ou Cell_DCH, comme illustré en 6. L'UE transmet ensuite au RNC le message « Initial Direct Transfer », et les étapes suivantes comportent, comme sur les figures 2 et 3, l'envoi par le RNC au CN du message « Initial UE Message », puis la création d'une connexion de signalisation entre UE et CN, comme illustré en 3.

Ainsi que l'a observé le demandeur, et comme il va maintenant être expliqué, des problèmes se posent, dans les cas illustrés sur les figures 3 et 4, pour l'établissement de connexion à partir du mode connecté, notamment dans le cas d'appel d'urgence (ou « emergency call »). En effet, un appel d'urgence n'est pas, habituellement, traité comme un appel normal ; notamment, lorsque le RNC sait qu'il s'agit d'un appel d'urgence, il peut par exemple décider de relâcher un autre appel de priorité moindre, ou d'autres actions sont bien sûr envisageables, comme reconfigurer d'autres appels,...etc., afin de libérer des ressources pour cet appel d'urgence.

Dans le cas illustré sur la figure 3, dans l'état actuel de la norme, à la réception du message « Initial Direct Transfer » le RNC ne connaît pas la cause d'établissement de la connexion, notamment il ne sait pas s'il s'agit d'établir une connexion pour établir un appel d'urgence. Dans ces conditions, cette connexion est traitée par le RNC comme une connexion normale, et il est alors possible que cette connexion ne soit pas acceptée par le RNC ou qu'elle soit acceptée avec des delais, ce qui peut donc avoir des conséquences graves, notamment pour un appel d'urgence. Plus généralement, le RNC sait seulement qu'une connexion doit être établie, mais il ne connaît pas la cause d'établissement de cette connexion, et il est alors possible que l'établissement de cette connexion ne soit pas traité par le RNC de manière appropriée à cette cause.

Dans le cas illustré sur la figure 4, dans l'état actuel de la norme, à la réception du message « Cell Update », le RNC ne connaît pas la cause d'établissement de la connexion, notamment il ne sait pas s'il s'agit d'établir une connexion pour établir un appel d'urgence. En effet, dans l'état actuel de la norme, les causes possibles de mise à jour de cellule pouvant être indiquées dans le message « Cell Update », telles que notamment : re-sélection de cellule (ou « cell reselection »), mise à jour périodique de cellule (ou « periodical cell update »), transmission de données dans le sens montant (ou « uplink data transmission »), réponse à une requête de « paging » (ou « paging response »), n'incluent pas de cause d'établissement de connexion. Il est donc possible que cette demande de mise à jour de cellule ne soit pas traitée de manière appropriée par le RNC, notamment si le but est de transmettre un message « Initial Direct Transfer », notamment pour l'établissement d'un appel d'urgence. Par ailleurs, de même qu'indiqué plus haut pour le cas de la figure 3, dans l'état actuel de la norme, à la réception du message « Initial Direct Transfer » le RNC ne connaît pas la cause d'établissement de la connexion, notamment il ne sait pas s'il s'agit d'etablir une connexion pour établir un appel d'urgence, et il est alors également possible que l'établissement de cette connexion ne soit pas traité par le RNC de manière appropriée à cette cause.

La présente invention a notamment pour but de résoudre tout ou partie de ces problèmes. Plus généralement, la présente invention a pour but d'améliorer la qualité de service dans ces systèmes.

Un des objets de la présente invention est un procédé pour l'établissement de connexion entre terminal mobile et réseau dans un système de radiocommunications mobiles, pour un terminal mobile ayant une connexion de contrôle radio établie avec le réseau d'accès radio dudit système, procédé comportant l'envoi par le terminal mobile au réseau d'accès radio d'au moins une information dite de cause d'établissement, indiquant une cause d'établissement de connexion et/ou, dans le cas de cause d'établissement de connexion correspondant à l'établissement d'un appel, une cause d'établissement d'appel.

Suivant une autre caractéristique, ladite information de cause d'établissement est contenue dans un message transmis par le terminal mobile pour initier une procédure de mise à jour de cellule.

Suivant une autre caractéristique, dans un système de type UMTS, ledit message correspond au message « Cell Update ».

Suivant une autre caractéristique, ladite information de cause d'établissement est contenue dans un message transmis par le terminal mobile pour l'établissement d'une connexion de signalisation entre terminal mobile et réseau coeur.

Suivant une autre caractéristique, dans un système de type UMTS, ledit message correspond au message « Initial Direct Transfer ».

Suivant une autre caractéristique, ladite information de cause d'établissement indique s'il s'agit d'un appel d'urgence.

Un autre objet de l'invention est un terminal mobile, comportant des moyens pour mettre en oeuvre un tel procédé.

Un autre objet de l'invention est un équipement de réseau de radiocommunications mobiles, notamment un contrôleur de réseau radio, comportant des moyens pour mettre en oeuvre un tel procédé.

Un autre objet de l'invention est un système de radiocommunications mobiles, comportant des moyens pour mettre en oeuvre un tel procédé.

D'autres objets et caractéristiques de la présente invention apparaîtront à la lecture de la description suivante d'un exemple de réalisation, faite en relation avec les dessins ci-annexés dans lesquels:
- la figure 1 rappelle l'architecture générale d'un système de radiocommunications mobiles,
- les figures 2, 3, 4 rappellent certains échanges de signalisation nécessaires à l'établissement d'une connexion dans un tel système, à partir de différents états RRC possibles pour un terminal mobile,
- les figures 5 et 6 sont destinées à illustrer des exemples de procédé d'établissement de connexion suivant l'invention, à partir de différents états RRC possibles pour un terminal mobile, correspondant en l'occurrence respectivement aux états RRC considérés sur les figures 3 et 4.

La présente invention suggère, notamment, pour un terminal mobile ayant une connexion de contrôle radio (ou connexion RRC) établie avec le réseau d'accès radio, que le terminal mobile envoie au réseau d'accès radio au moins une information dite ici de cause d'établissement indiquant une cause d'établissement de connexion et/ou, dans le cas de cause d'établissement de connexion correspondant à l'établissement d'un appel, une cause d'établissement d'appel..

Notamment, ladite information de cause d'établissement peut être contenue dans un message transmis par le terminal mobile pour l'établissement d'une connexion de signalisation entre terminal mobile et réseau coeur. Notamment, dans un système de type UMTS, ledit message peut être un message de type « Initial Direct Transfer ».

Ladite information de cause d'établissement peut aussi être contenue dans un message transmis par le terminal mobile pour initier une procédure de mise à jour de cellule. Notamment, dans un système de type UMTS, ledit message peut être un message RRC de mise à jour de cellule ou « Cell Update ».

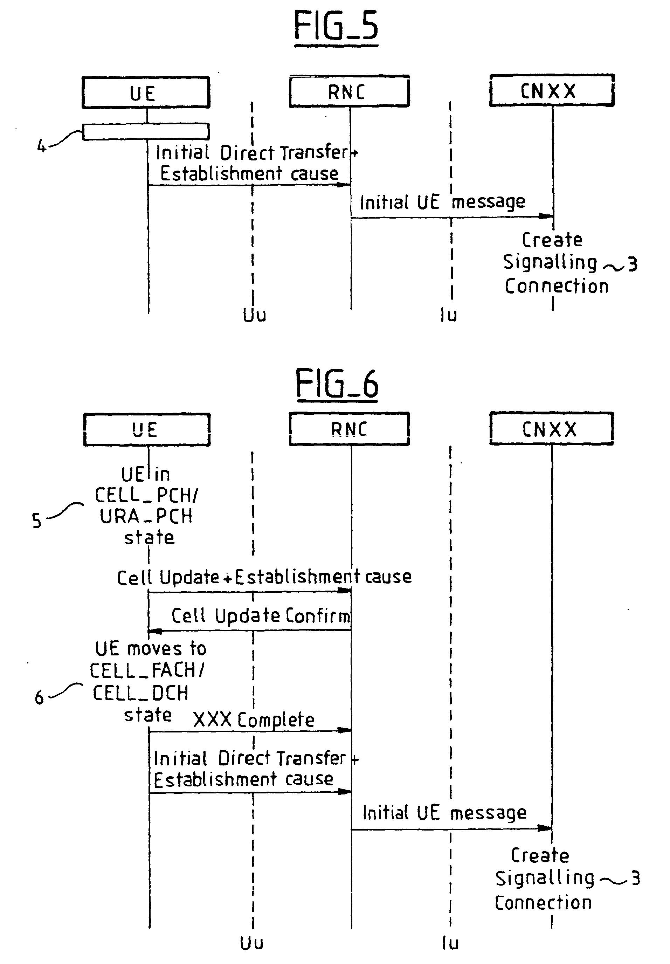

Les figures 5 et 6 illustrent des exemples de procédé d'établissement de connexion suivant l'invention, à partir d'états RRC correspondant en l'occurrence respectivement aux cas illustrés sur les figures 3 et 4.

La figure 5 illustre ainsi le cas d'établissement d'une connexion à partir de l'état Cell_FACH ou Cell_DCH, comme illustré en 4. L'UE envoie alors directement le message « RRC Initial Direct Transfer », comme illustré sur la figure 5. Comme illustré sur la figure 5, le message « RRC Initial Direct Transfer » inclut une cause d'établissement, ce qui a été noté « RRC Initial Direct Transfer + Establishment Cause ». Le RNC peut alors traiter l'établissement de cette connexion de manière appropriée à sa cause d'établissement ; notamment, s'il s'agit d'un appel d'urgence, le RNC peut éventuellement, par exemple, décider de relâcher un autre appel de priorité moindre, afin de libérer des ressources pour cet appel d'urgence. Par exemple, la cause d'établissement peut correspondre à la cause « establishment cause » telle que définie, dans l'état actuel de la norme, pour transmission dans le message « RRC Connexion Request », comme rappelé précédemment. Dans cet exemple, cette cause d'établissement indique alors une cause d'établissement de connexion et, dans le cas de cause d'établissement de connexion correspondant à l'établissement d'un appel, une cause d'établissement d'appel. Suivant un autre exemple, la cause d'établissement pourrait indiquer une cause d'établissement de connexion, ou, dans le cas de cause d'établissement de connexion correspondant à l'établissement d'un appel, une cause d'établissement d'appel.

La figure 6 illustre le cas d'établissement d'une connexion à partir de l'état Cell_PCH ou URA_PCH, comme illustré en 5. L'UE commence alors par envoyer un message RRC « Cell update » , comme illustré sur la figure 6. Comme illustré sur la figure 6, le message RRC « Cell Update » inclut une cause d'établissement, ce qui a été noté « Cell Update + Establishment Cause ». Le RNC peut alors traiter l'établissement de cette connexion de manière appropriée à sa cause d'établissement ; notamment, s'il s'agit d'un appel d'urgence, le RNC peut éventuellement, par exemple, décider de relâcher un autre appel de priorité moindre, afin de libérer des ressources pour cet appel d'urgence. Par exemple, la cause d'établissement peut correspondre à la cause « establishment cause » telle que définie, dans l'état actuel de la norme, pour transmission dans le message « RRC Connexion Request », comme rappelé précédemment. Dans cet exemple, cette cause d'établissement indique alorsune cause d'établissement de connexion et, dans le cas de cause d'établissement de connexion correspondant à l'établissement d'un appel, la cause de l'établissement de l'appel. Suivant un autre exemple, la cause d'établissement pourrait indiquer une cause d'établissement de connexion, ou, dans le cas de cause d'établissement de connexion correspondant à l'établissement d'un appel, une cause d'établissement d'appel.

En outre, dans l'exemple illustré sur la figure 6, le message « RRC Initial Direct Transfer » inclut, comme dans l'exemple illustré sur la figure 5, une cause d'établissement, ce qui a été noté « RRC Initial Direct Transfer + Establishment Cause ».

La présente invention a également pour objet un terminal mobile, un équipement de réseau d'accès radio (notamment contrôleur de réseau d'accès radio), et un système de radiocommunications mobiles, comportant des moyens pour mettre en oeuvre un tel procédé.

La réalisation particulière de tels moyens ne présentant pas de difficulté particulière pour l'homme du métier, de tels moyens ne nécessitent pas d'être décrits ici de manière plus détaillée que ce qui a été fait précédemment, par leur fonction.

La présente invention a ainsi également pour objet un terminal mobile, comportant des moyens pour transmettre au réseau d'accès radio d'un système de radiocommunications mobiles, pour l'établissement d'une connexion entre terminal mobile et réseau dans le cas où ledit terminal a une connexion de contrôle radio établie avec ledit réseau d'accès radio, au moins une information dite de cause d'établissement indiquant une cause d'établissement de connexion, et/ou, dans le cas de cause d'établissement de connexion correspondant à l'établissement d'un appel, une cause d'établissement d'appel.

Notamment, ledit terminal comporte des moyens pour transmettre ladite information de cause d'établissement dans un message transmis par le terminal mobile pour initier une procédure de mise à jour de cellule.

Notamment, dans un système de type UMTS, ledit message correspond au message « Cell Update ».

Notamment, ledit terminal comporte des moyens pour transmettre ladite information de cause d'établissement dans un message transmis par le terminal mobile pour l'établissement d'une connexion de signalisation entre terminal mobile et réseau coeur.

Notamment, dans un système de type UMTS, ledit message correspond au message « Initial Direct Transfer ».

Notamment, ladite information de cause d'établissement indique s'il s'agit d'un appel d'urgence.

La présente invention a ainsi également pour objet un équipement de réseau de radiocommunications mobiles, notamment contrôleur de réseau radio, comportant des moyens pour recevoir d'un terminal mobile, pour l'établissement d'une connexion entre terminal mobile et réseau dans le cas où ledit terminal a une connexion de contrôle radio établie avec ledit réseau d'accès radio, au moins une information dite de cause d'établissement indiquant une cause d'établissement de connexion, et/ou, dans le cas de cause d'établissement de connexion correspondant à l'établissement d'un appel, une cause d'établissement d'appel.

Notamment, ledit équipement de réseau comporte des moyens pour recevoir ladite information de cause d'établissement dans un message transmis par le terminal mobile pour initier une procédure de mise à jour de cellule.

Notamment, dans un système de type UMTS, ledit message correspond au message « Cell Update ».

Notamment, ledit équipement de réseau comporte des moyens pour recevoir ladite information de cause d'établissement dans un message transmis par le terminal mobile pour l'établissement d'une connexion de signalisation entre terminal mobile et réseau coeur.

Notamment, dans un système de type UMTS, ledit message correspond au message « Initial Direct Transfer ».

Notamment, ladite information de cause d'établissement indique s'il s'agit d'un appel d'urgence.

La présente invention a ainsi également pour objet un système de radiocommunications mobiles, comportant au moins un tel terminal mobile, et/ou au moins un tel équipement de réseau.

## Revendications

1. Procédé pour l'établissement de connexion entre terminal mobile (UE) et réseau dans un système de radiocommunications mobiles, pour un terminal mobile ayant une connexion de contrôle radio (RRC connection) établie avec le réseau d'accès radio (UTRAN) dudit système, procédé comportant l'envoi par le terminal mobile au réseau d'accès radio d'ou moins une information dite de cause d'établissement (Establishment Cause) indiquant une cause d'établissement de connexion, et/ou, dans le cas de cause d'établissement de connexion correspondant à l'établissement d'un appel, une cause d'établissement d'appel.

2. Procédé selon la revendication 1, dans lequel ladite information de cause d'établissement est contenue dans un message (Cell Update) transmis par le terminal mobile pour initier une procédure de mise à jour de cellule.

3. Procédé selon la revendication 2, dans lequel, dans un système de type UMTS, ledit message correspond au message « Cell Update ».

4. Procédé selon la revendication 1, dans lequel ladite information de cause d'établissement est contenue dans un message (Initial Direct Transfer) transmis par la terminal mobile pour l'établissement d'une connexion de signalisation entre terminal mobile et réseau coeur (CN).

5. Procédé selon la revendication 4, dans lequel, dans un système de type UMTS, ledit message correspond au message « Initial Direct Transfer ».

6. Procédé selon l'une des revendications 1 à 5, dans lequel ladite information de cause d'établissement indique s'il s'agit d'un appel d'urgence.

7. Terminal mobile (UE), comportant des moyens pour transmettre au réseau d'accès radio (UTRAN) d'un système de radiocommunications mobile, pour l'établissement d'une connexion entre terminal mobile et réseau dans le cas où ledit terminal a une connexion de contrôle radio (RRC Connection) établie avec ledit réseau d'accès radio, au moins une information dite de cause d'établissement (Establishment Cause) indiquant une cause d'établissement de connexion, et/ou, dans le cas de cause d'établissement de connexion, correspondant à l'établissement d'un appel, une cause d'établissement d'appel.

8. Terminal selon la revendication 7, comportant des moyens pour transmettre ladite infirmation de cause d'établissement dans un message (Cell Update) transmis par le terminal) mobile pour initier une procédure de mise à jour de cellule.

9. Terminal selon la revendication 8, dans lequel, dans un système de type UMTS, ledit message correspond au message « Cell Update ».

10. Terminal selon la revendication 7, comportant des moyens pour transmettre ladite information de cause d'établissement dans un message (Initial Direct Transfer) transmis par le terminal mobile pour l'établissement d'une connexion de signalisation entre terminal mobile et réseau coeur (CN).

11. Terminal selon la revendication 10, dans lequel, dans un système de type UMTS, ledit message correspond au message « Initial Direct Transfer ».

12. Terminal selon l'une des revendications 7 à 11, dans lequel ladite information de cause d'établissement indique s'il s'agit d'un appel d'urgence.

13. Equipement de réseau de radiocommunications mobiles, notamment contrôleur de réseau radio (RNC), comportant des moyens pour recevoir d'un terminal mobile (UE), pour l'établissement d'une connexion entre terminal mobile et réseau dans le cas ou ledit terminal a une connexion de contrôle radio (RRC connection) établie avec ledit réseau d'accès radio, au moins une information dite de cause d'établissement (Establishment Cause) indiquant une cause d'établissement de connexion, et/ou, dans le cas de cause d'établissement de connexion correspondant à l'établissement d'un appel, une cause d'établissement d'appel.

14. Equipement de réseau selon la revendication 13, comportant des moyens pour recevoir ladite information de cause d'établissement dans un message (Cell Update) transmis par le terminal mobile pour initier une procédure de mise à jour de cellule.

15. Equipement de réseau selon la revendication 14, dans lequel, dans un système de type UMTS, ledit message correspond au message « Cell Update ».

16. Equipement de réseau selon la revendication 13, comportant des moyens pour recevoir ladite information de cause d'établissement dans un message (Initial Direct Transfer) transmis par le terminal mobile pour l'établissement d'une connexion de signalisation entre terminal mobile et réseau coeur.

17. Equipement de réseau selon la revendication 16, dans lequel, dans un système de type UMTS, ledit message correspond au message «Initial Direct Transfer ».

18. Equipement de réseau selon l'une des revendications 13 à 17, dans lequel ladite information de cause d'établissement indique s'il s'agit d'un appel d'urgence.

19. Système de radiocommunications mobiles, comportant au moins un terminal mobile selon l'une des revendications 7 à 12, et/ou au moins une équipement de réseau selon l'une des revendications 13 à 18,

## Claims

1. Method for establishing a connection between a mobile terminal (UE) and a network in a mobile radiocommunication system, for a mobile terminal with a radio control connection (RRC connection) set up with the radio access network (UTRAN) of said system, a method comprising the sending by the mobile terminal to the radio access network of at least one item of information said to be establishment cause information indicating a connection establishment cause and/or, in the case of a connection establishment cause corresponding to establishing a call, a call establishment cause.

2. Method according to claim 1, in which said establishment cause information is contained in a message (Cell Update) sent by the mobile terminal to initiate a cell update procedure.

3. Method according to claim 2 in which, in a UMTS type system, said message corresponds to the "Cell Update" message.

4. Method according to claim 1, in which said establishment cause information is contained in a message (Initial Direct Transfer) sent by the mobile terminal to establish a signaling connection between a mobile terminal and a core network (CN).

5. Method according to claim 4 in which, in a UMTS type system, said message corresponds to the "initial Direct Transfer" message.

6. Method according to one of claims 1 to 5, in which said establishment cause information indicates whether it is an emergency call,

7. Mobile terminal (UE), comprising means for sending to the radio access network (UTRAN) of a mobile radiocommunication system, for the establishment of a connection between mobile terminal and network in the event that said terminal has a radio control connection (RRC Connection) established with said radio access network, at least one item of information said to be establishment cause information indicating a connection establishment cause and/or, in the case of a connection establishment cause corresponding to the establishment of a call, a call establishment cause.

8. Terminal according to claim 7, comprising means for sending said establishment cause information in a message (Cell Update) sent by the mobile terminal to initiate a cell update procedure.

9. Terminal according to claim 8 in which, in a UMTS type system, said message corresponds to the "Cell Update" message.

10. Terminal according to claim 7, comprising means for sending said establishment cause information in a message (Initial Direct Transfer) sent by the mobile terminal to establish a signaling connection between mobile terminal and core network (CN).

11. Terminal according to claim 10 in which, in a UMTS type system, said message corresponds to the "Initial Direct Transfer" message.

12. Terminal according to one of claims 7 to 11, in which said establishment cause information indicates whether it is an emergency call.

13. Mobile radiocommunication network device, in particular radio network controller (RNC), comprising means for receiving from a mobile terminal (UE), for the establishment of a connection between mobile terminal and network in the event that said terminal has a radio control connection (RRC connection) established with said radio access network, at least one item of information said to be establishment cause information indicating a connection establishment cause and/or, in the case of a connection establishment cause corresponding to the establishment of a call, a call establishment cause,

14. Network device according to claim 13, comprising means for receiving said establishment cause information in a message (Cell Update) sent by the mobile terminal to initiate a cell update procedure.

15. Network device according to claim 14 in which, in a UMTS type system, said message corresponds to the "Cell Update" message.

16. Network device according to claim 13, comprising means for receiving said establishment cause information in a message (initial Direct Transfer) sent by the mobile terminal to establish a signaling connection between mobile terminal and core network.

17. Network device according to claim 16 in which, in a UMTS type system, said message corresponds to the "Initial Direct Transfer" message.

18. Network device according to one of claims 13 to 17, in which said establishment cause information indicates whether it is an emergency call.

19. Mobile radiocommunication system, comprising at least one mobile terminal according to one of claims 7 to 12, and/or at least one network device according to one of claims 13 to 18.

## Patentansprüche

1. Verfahren für den Aufbau einer Verbindung zwischen einem Mobilendgerät (UE) und einem Netzwerk in einem Mobilfunkkommunikationssystem, für ein Mobilendgerät, welches eine aufgebaute Funksteuerverbindung (RRC connection) mit dem Funkzugangsnetzwerk (UTRAN) des besagten Systems hat, wobei das Verfahren das Senden mindestens einer sogenannten Aufbaugrund-Information (Establishment Cause), welche einen Grund für den Aufbau der Verbindung und/oder, wenn der Grund des Aufbaus der Verbindung dem Aufbau eines Anrufs entspricht, einen Anrufaufbaugrund angibt, von dem Mobilendgerät an das Funkzugangsnetz umfasst.

2. Verfahren nach Anspruch 1, wobei die besagte Aufbaugrund-Information in einer vom Mobilendgerät für das Einleiten eines Zellenaktualisierungsvorgangs übertragenen Nachricht (Cell Update) enthalten ist.

3. Verfahren nach Anspruch 2, wobei, in einem System vom Typ UMTS, die besagte Nachricht der "Cell Update"-Nachricht entspricht.

4. Verfahren nach Anspruch 1, wobei die besagte Aufbaugrund-Information in einer von dem Mobilendgerät für den Aufbau einer Signalisierungsverbindung zwischen dem Mobilendgerät und dem Kernnetzwerk (CN) übertragenen Nachricht (Initial Direct Transfer) enthalten ist.

5. Verfahren nach Anspruch 4, wobei, in einem System vom Typ UMTS, die besagte Nachricht der "Initial Direct Transfer"-Nachricht entspricht.

6. Verfahren nach einem der Ansprüche bis 5, wobei die besagte Aufbaugrund-Information angibt, ob es sich um einen Notruf handelt.

7. Mobilendgerät (UE) mit Mitteln zum Übertragen mindestens einer sogenannten Aufbaugrund-Information (Establishment Cause), welche einen Grund für den Aufbau der Verbindung und/oder, wenn der Grund für den Verbindungsaufbau einem Anrufaufbau entspricht, einen Anrufaufbaugrund angibt, an das Funkzugangsnetzwerk (UTRAN) eines Mobilfunkkommnunikationssystems für den Aufbau einer Verbindung zwischen dem Mobilendgerät und dem Netzwerk, wenn das besagte Endgerät eine aufgebaute Funksteuerverbindung (RRC connection) mit dem besagten Funkzugangsnetz hat.

8. Endgerät nach Anspruch 7 mit Mitteln zum Übertragen der besagten Aufbaugrund-Information in einer von dem Mobilendgerät übertragenen Nachricht (Cell Update) für das Einleiten eines Zellenaktualisierungsvorgangs.

9. Endgerät nach Anspruch 8, wobei, in einem System vom Typ UMTS, die besagte Nachricht der "Cell Update"-Nachricht entspricht.

10. Endgerät nach Anspruch 7 mit Mitteln zum Übertragen der besagten Aufbaugrund-Information in einer von dem Mobilendgerät übertragenen Nachricht (Initial Direct Transfer) für den Aufbau einer Signalisierungsverbindung zwischen dem Mobilendgerät und dem Kernnetzwerk (CN).

11. Endgerät nach Anspruch 10, wobei, in einem System vom Typ UMTS, die besagte Nachricht der "Initial Direct Transfert"-Nachricht entspricht.

12. Endgerät nach einem der Ansprüche 7 bis 11, wobei die besagte Aufbaugrund-Information angibt, ob es sich um einen Notruf handelt.

13. Mobilfunkkommunikationsnetz-Einrichtung, insbesondere eine Funknetzwerk-Steuereinrichtung (RNC), mit Mitteln zum Empfangen mindestens einer sogenannten Aufbaugrund-Information (Establishment Cause), welche einen Grund für den Aufbau einer Verbindung und/oder, wenn der Grund für den Aufbau einer Verbindung dem Aufbau eines Anrufs entspricht, einen Anrufaufbaugrund angibt, von einem Mobilendgerät (UE) für den Aufbau einer Verbindung zwischen dem Mobilendgerät und dem Netzwerk, wenn das besagte Endgerät eine aufgebaute Funksteuerverbindung (RRC connection) mit dem besagten Funkzugangsnetzwerk hat.

14. Netzeinrichtung nach Anspruch 13 mit Mitteln zum Empfangen der besagten Aufbaugrund-Information in einer von dem Mobilendgerät übertragenen Nachricht (Cell Update) für das Einleiten eines Zellenaktualisierungsvorgangs.

15. Netzeinrichtung nach Anspruch 14, wobei, in einem System vom Typ UMTS, die besagte Nachricht der "Cell Update"-Nachricht entspricht.

16. Netzeinrichtung nach Anspruch 13 mit Mitteln zum Empfangen der besagten Aufbaugrund-Information in einer von dem Mobilendgerät übertragenen Nachricht (Initial Direct Transfer) für den Aufbau einer Signalisierungsverbindung zwischen dem Mobilendgerät und dem Kernnetzwerk.

17. Netzeinrichtung nach Anspruch 16, wobei, in einem System vom Typ UMTS, die besagte Nachricht der "Initial Direct Transfer"-Nachricht entspricht.

18. Netzeinrichtung nach einem der Ansprüche 13 bis 17, wobei die besagte Aufbaugrund-Information angibt, ob es sich um einen Notruf handelt.

19. Mobilfunkkommunikationssystem mit mindestens einem Mobilendgerät nach einem der Ansprüche 7 bis 12, und/oder mindestens einer Netzeinrichtung nach einem der Ansprüche 13 bis 18.
